# EUROPEAN PATENT APPLICATION

(11) **EP 3 958 017 A2**
(43) Date of publication of application: **23.02.2022**
(21) Application number: 21188292.3
(22) Date of filing: 28.07.2021
(51) Int. Cl.: G01S 17/04, G01J 1/02, B64D 9/00, G01J 5/08, G01J 1/04, G08B 29/04, G01J 1/18

(54) **INFRA-RED SENSOR ASSEMBLIES WITH BUILT-IN TEST EQUIPMENT**

(30) Priority: 31.07.2020 IN 202041032966; 21.12.2020 US 202017128903
(71) Applicant: Goodrich Corporation, Charlotte, NC 28217-4578 (US)
(72) Inventor: SENGODAN, Rajkumar, Namakkal (IN); RAMALINGAM, Thirunavukkarasu, Bangalore (IN)
(74) Representative: Dehns

(57) **Abstract**

An infra-red sensor assembly (100) comprises a substrate (108) and an infra-red transmitter (120) electrically coupled to the substrate (108). An infra-red receiver (104) is electrically coupled to the substrate. A testing infra-red transmitter is electrically coupled to the substrate. An infra-red transmission channel optically couples the testing infra-red transmitter and the infra-red receiver.

## Description

### CROSS-REFERENCE TO RELATED APPLICATIONS

This application claims priority to, and the benefit of, India Patent Application No. 202041032966, filed July 31, 2020 and titled "INFRA-RED SENSOR ASSEMBLIES WITH BUILT-IN TEST EQUIPMENT."

### FIELD

The present disclosure relates to infra-red sensors, and more specifically, to infra-red sensors having built-in test equipment.

### BACKGROUND

Cargo handling systems move loads, for example, pallets or unit load devices (ULDs), through the cargo area of an aircraft using motorized wheels, referred to as "power drive units" (PDUs), located generally along on a cargo deck of the aircraft. The movement of ULDs can be controlled by an operator using various control panels and/or autonomously using various sensors. The PDUs include infra-red (IR) sensors configured to detect objects located over the PDU. Currently, the IR sensor cannot be testing while PDU is installed. Thus, the entire PDU is generally removed to test the if the IR sensor is working properly.

### SUMMARY

An infra-red sensor assembly is disclosed herein. In accordance with various embodiments, the infra-red sensor assembly may comprise a substrate and a first infra-red transmitter electrically coupled to the substrate. An infra-red receiver may be electrically coupled to the substrate. A testing infra-red transmitter electrically may be coupled to the substrate. An infra-red transmission channel may optically couple the testing infra-red transmitter and the infra-red receiver.

In various embodiments, a controller may be operably coupled to the first infra-red transmitter, the infra-red receiver, and the testing infra-red transmitter. A first metal-oxide-semiconductor field-effect transistor may be coupled between the controller and the first infra-red transmitter. A second metal-oxide-semiconductor field-effect transistor may be coupled between the controller and the testing infra-red transmitter.

In various embodiments, the controller may be configured to turn on the first metal-oxide-semiconductor field-effect transistor and turn off the second metal-oxide-semiconductor field-effect transistor, when the infra-red sensor assembly is in an object detection mode. In various embodiments, the controller may be configured to turn off the first metal-oxide-semiconductor field-effect transistor and turn on the second metal-oxide-semiconductor field-effect transistor, when the infra-red sensor assembly is in a self-test mode.

In various embodiments, the infra-red transmission channel may define an optical pathway, the optical pathway being configured to reflect infra-red radiation emitted from the testing infra-red transmitter toward to the infra-red receiver. In various embodiments, a lens may be coupled to the infra-red transmission channel. In various embodiments, the lens may comprise a convex surface oriented toward the infra-red receiver.

In various embodiments, a first portion of the infra-red transmission channel and a second portion of the infra-red transmission channel form a 120° angle.

A power drive unit is also disclosed herein. In accordance with various embodiments, the power drive unit may comprise an infra-red sensor assembly configured to detect objects located over the motorized wheel. The infra-red sensor assembly may include a substrate, a plurality of infra-red transmitters electrically coupled in series to the substrate, an infra-red receiver electrically coupled to the substrate, a testing infra-red transmitter electrically coupled to the substrate, and an infra-red transmission channel optically coupling the testing infra-red transmitter and the infra-red receiver.

In various embodiments, the infra-red sensor assembly may further comprise a controller operably coupled to the plurality of infra-red transmitters. the infra-red receiver, and the testing infra-red transmitter; a first metal-oxide-semiconductor field-effect transistor coupled between the controller and the plurality of infra-red transmitters; and a second metal-oxide-semiconductor field-effect transistor coupled between the controller and the testing infra-red transmitter.

In various embodiments, the controller may be configured to turn on the first metal-oxide-semiconductor field-effect transistor and turn off the second metal-oxide-semiconductor field-effect transistor when the infra-red sensor assembly is in an object detection mode. The controller may be configured to turn off the first metal-oxide-semiconductor field-effect transistor and turn on the second metal-oxide-semiconductor field-effect transistor when the infra-red sensor assembly is in an self-test mode.

In various embodiments, the infra-red transmission channel may define an optical pathway, the optical pathway being configured to reflect infra-red radiation emitted from the testing infra-red transmitter toward to the infra-red receiver. In various embodiments, the infra-red sensor assembly may further comprise a lens coupled to the infra-red transmission channel.

An article of manufacture is also disclosed herein. In accordance with various embodiments, the article includes a tangible, non-transitory computer-readable storage medium having instructions stored thereon for controlling an infra-red sensor assembly. The instructions, in response to execution by a controller, cause the controller to perform operations, which may comprise receiving, by the controller, an initial power-on signal; performing, by the controller, a self-check of the infra-red sensor assembly in response to the initial power-on signal; and determining, by the controller, if a fault condition is present.

In various embodiments, performing, by the controller, the self-check of the infra-red sensor assembly, may comprise: powering off, by the controller, a first metal-oxide-semiconductor field-effect transistor electrically coupled between the controller and a plurality of infra-red transmitters; and powering on, by the controller, a second metal-oxide-semiconductor field-effect transistor electrically coupled between the controller and a testing infra-red transmitter.

In various embodiments, determining, by the controller, if the fault condition is present may comprise determining, by the controller, if the testing infra-red transmitter is emitting infra-red radiation.

In various embodiments, determining, by the controller, if the fault condition is present may comprise determining, by the controller, an expected BITE_Sense_Feedback signal; receiving, by the controller, a BITE_Sense_Feedback signal from an infra-red receiver of the infra-red sensor assembly; and comparing, by the controller, the BITE_Sense_Feedback signal from the infra-red receiver to the expected BITE_Sense_Feedback signal.

In various embodiments, the operations may further comprise ordering, by the controller, a fault alert to be output by an output device if the controller determines the fault condition is present. In various embodiments, the fault alert may be configured to indicate whether the fault condition is in a transmitter section or a receiver section of the infra-red sensor assembly.

In various embodiments, the infra-red sensor assembly may comprise a infra-red transmission channel optically coupling the testing infra-red transmitter and the infra-red receiver.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the following illustrative figures. In the following figures, like numbers denote to like elements.
FIG. 1A illustrates a schematic view of an aircraft being loaded with cargo, in accordance with various embodiments;
FIG. 1B illustrates a portion of an aircraft cargo deck, in accordance with various embodiments;
FIG. 2A and 2B illustrate an IR transmission channel electrically coupling a testing IR transmitter and an IR receiver of, in accordance with various embodiments;
FIGs. 3A and 3B illustrate an IR sensor assembly with built-in test equipment (BITE), in accordance with various embodiments;
FIGs. 4A and 4B illustrate a circuit of an IR sensor assembly with for a PDU, in accordance with various embodiments;
FIG. 5 illustrates a circuit for an IR sensor assembly with BITE for a fire detector, in accordance with various embodiments; and
FIG. 6 illustrates a circuit for an IR sensor assembly with BITE for a thermal camera.

Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein. Thus, the detailed description herein is presented for purposes of illustration only and not of limitation. The scope of the disclosure is defined by the appended claims. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Surface shading lines may be used throughout the figures to denote different parts but not necessarily to denote the same or different materials. Throughout the present disclosure, like reference numbers denote like elements. Accordingly, elements with like element numbering may be shown in the figures, but may not necessarily be repeated herein for the sake of clarity.

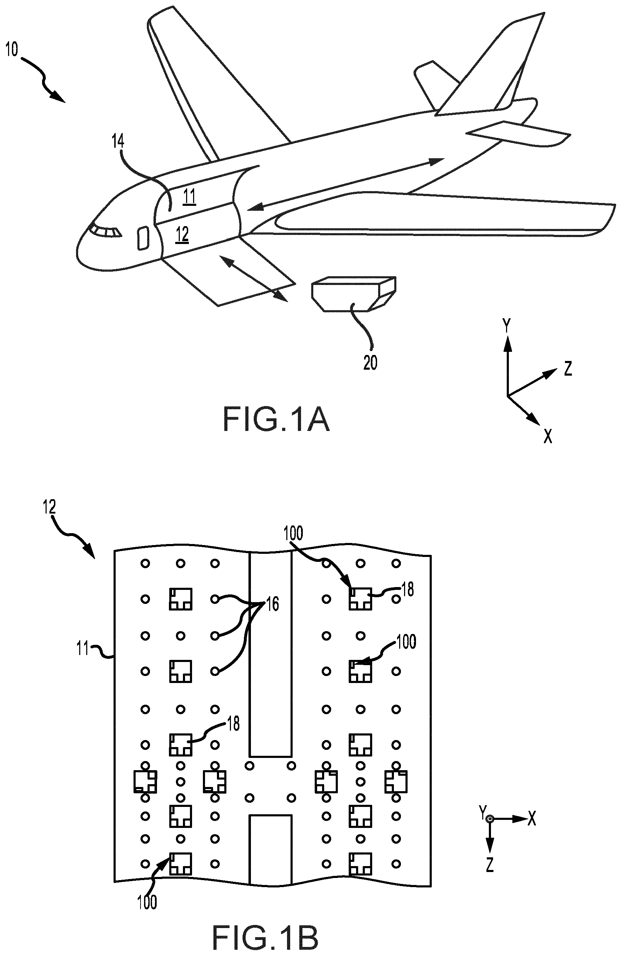

In accordance with various embodiments, and with reference to FIG. 1A, an aircraft 10 having a cargo deck 12 is illustrated. Aircraft 10 may comprise a cargo load door 14. Cargo 20 may be loaded through cargo load door 14 and onto cargo deck 12. Items to be shipped by air, freight, and/or the like are typically loaded first onto specially configured pallets or into specially configured containers. In aviation, those various pallets and/or containers are commonly are referred to as unit load devices (ULDs). In various embodiments, cargo 20 may be a ULD. Once inside aircraft 10, the cargo 20 is moved along cargo deck 12 to its final stowage position. Multiple pieces of cargo may be brought on-board aircraft 10, during one or more loading procedures (e.g., at separate destinations), with each piece of cargo being placed in its respective stowage and transportation position on cargo deck 12. After aircraft 10 has reached its destination, cargo 20 may be unloaded from aircraft 10 similarly, but in reverse sequence to the loading procedure.

In accordance with various embodiments, and with reference to FIG. 1B, cargo deck 12 is illustrated in greater detail. The cargo deck 12 may be defined by walls 11 of aircraft 10. Cargo deck 12 may include a plurality of freely rotating conveyance rollers 16 and a number of power drive units (PDUs) 18 mounted in cargo deck 12. PDUs 18 include one or more motorized wheels and are configured to propel cargo over conveyance rollers 16 and across cargo deck 12. In accordance with various embodiments, PDUs 18 may each include and IR sensor assembly 100. IR sensor assembly 100 is configured to detect the presence of objects (e.g., a ULDs) located over PDU 18.

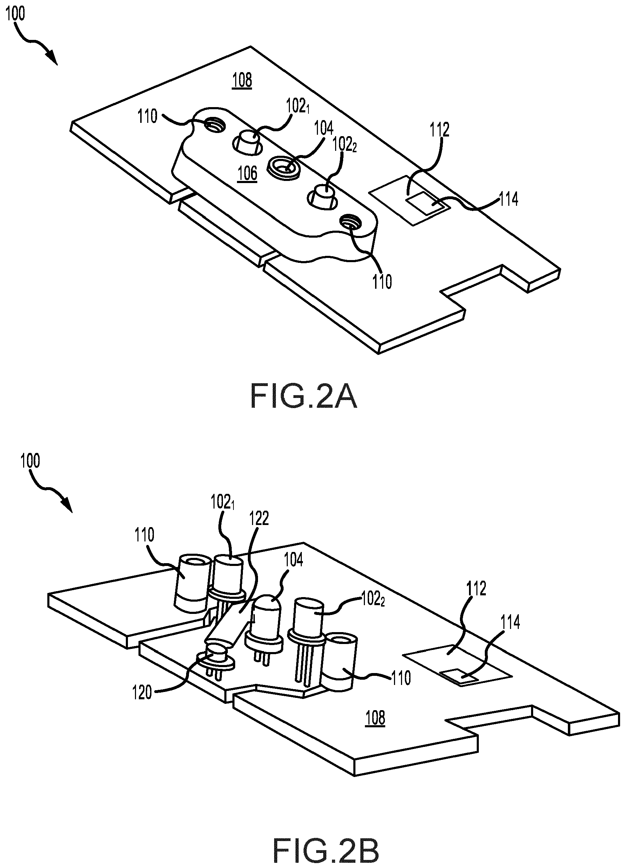

With reference to FIG. 2A, an IR sensor assembly 100 is illustrated. IR sensor assembly 100 includes a plurality of IR transmitters, such as IR transmitter 102₁ and IR transmitter 102₂ (collectively referred to as IR transmitters 102). IR transmitters 102 are configured to transmits IR radiation (i.e., radiation having a wavelength of between 700 nanometer (nm) and 1.0 millimeters (mm) and a frequency between 430 terahertz (THz) and 300 gigahertz (GHz)). In various embodiments, IR transmitters 102 are configured to transmits IR radiation having a wavelength of between about 850 nm and about 950 nm. In various embodiments, IR transmitters 102 generate light in pulsed waveform with a fixed duty cycle. In various embodiments, IR transmitters 102 generate light in pulsed waveform with a variable duty cycle. In various embodiments, IR transmitters 102 each comprise an IR emitting diode. For example, IR transmitters 102 may each be a high intensity gallium arsenide infrared emitting diode (GaAIA).

IR sensor assembly 100 further includes an IR receiver 104. IR receiver 104 is a light receiving sensor configured to receive and detect reflected IR radiation having the wavelength and frequency produced by IR transmitters 102. In this regard, if an object (e.g., a ULD) is located over the PDU in which IR sensor assembly 100 is installed, portions of the IR radiation produced by IR transmitters 102 get reflected by the object and the reflected IR radiation is received by the IR receiver 104.

IR sensor assembly 100 further includes a housing 106. Housing 106 may enclose a portion of IR transmitters 102 and IR receiver 104. Housing 106 provides structural support and may protect IR transmitters 102 and IR receiver 104 from damage. IR sensor assembly 100 further includes a substrate 108. In various embodiments, substrate 108 includes a plurality of conductive layers and/or conductive traces. The conductive layers may be separated by electrically insulating material of substrate 108. In various embodiments, substrate 108 is a printed circuit board (PCB). The conductive layers of substrate 108 form circuitry configured to support operation of IR sensor assembly 100. IR sensor assembly 100 further includes one or more fastener components 110. Fastener components 110 are configured to secure IR sensor assembly 100 to substrate 108. In various embodiments, housing 106 include fastener components 110.

IR sensor assembly 100 may include a controller 112. In various embodiments, controller 112 may be coupled to and/or supported by substrate 108. Controller 112 is configured to control the powering on and powering off of IR sensor assembly 100 (e.g., the flow of current to IR transmitters 102 and IR receiver 104). Controller 112 may be electrically connected to IR transmitters 102 and IR receiver 104 via circuity of substrate 108. As described in further detail below, controller 112 may be configured to perform a self-test of IR assembly 100. Controller 112 may include one or more processors and one or more tangible, non-transitory memories 114 and be capable of implementing logic. The processor can be a general purpose processor, a digital signal processor (DSP), an application specific integrated circuit (ASIC), a field programmable gate array (FPGA) or other programmable logic device, discrete gate or transistor logic, discrete hardware components, or a combination thereof.

System program instructions and/or controller instructions may be loaded onto a tangible, non-transitory, computer-readable medium 114 (also referred to herein as tangible, non-transitory memory) having instructions stored thereon that, in response to execution by controller 112, cause controller 112 to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in *In Re Nuijten* to fall outside the scope of patentable subject matter under 35 U.S.C. § 101.

With reference to FIG. 2B, IR sensor assembly 100 is illustrated with housing 106 removed to illustrate BITE of IR sensor assembly 100. In accordance with various embodiments, IR sensor assembly 100 includes a testing IR transmitter 120. Testing IR transmitter 120 may be similar to IR transmitters 102. In this regard, testing IR transmitter 120 is configured to transmits IR radiation. In various embodiments, testing IR transmitter 120 transmits IR radiation having the same wavelength and frequency as IR transmitters 102. Testing IR transmitter 120 generates light in pulsed waveform with a fixed duty cycle or with a variable duty cycle. In various embodiments, testing IR transmitter 120 comprises an IR emitting diode. For example, testing IR transmitter 120 may be a high intensity gallium arsenide infrared emitting diode. As described in further detail below, testing IR transmitter 120 is electrically and operationally coupled to controller 112 via circuitry of substrate 108.

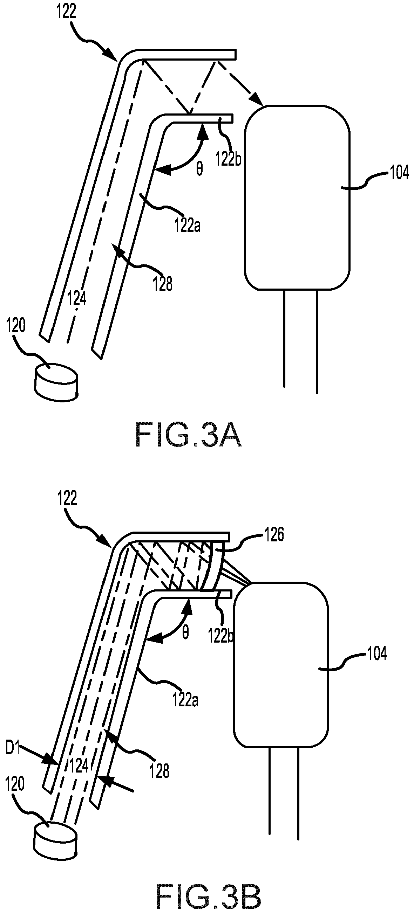

IR sensor assembly 100 further includes an IR transmission channel 122. IR transmission channel 122 is deigned to receive the IR radiation output by testing IR transmitter 120 and to scatter and/or reflect, at least, a portion of the IR radiation output by testing IR transmitter 120 towards IR receiver 104. In this regard, IR transmission channel 122 is configured to optically couple testing IR transmitter 120 and IR receiver 104. IR transmission channel 122 may be formed of plastic, polycarbonate, metal, or any suitable material. The color and shape (e.g., angle θ, with momentary reference to FIG. 3) of IR transmission channel 122 may be selected based on the IR radiation emitted by testing IR transmitter 120 and/or the IR radiation detectable by IR receiver 104. In this regard, the color and shape of IR transmission channel 122 may be selected to produce a desired diffusion and/or reflection of the IR radiation emitted by testing IR transmitter 120. In various embodiments, IR transmission channel 122 is a black color having color code red green blue (RGB) (0, 0, 0). In various embodiments, IR transmission channel 122 may be a light gray color having color code RGB (105, 105, 105). IR transmission channel 122 may be a gray color having color code RGB (128, 128, 128), a dark gray color having color code RGB (169, 169, 169), or any other suitable color.

With reference to FIG. 3A, additional details of IR transmission channel 122 are illustrated. In various embodiments, IR transmission channel 122 is angled such that a first portion 122a of IR transmission channel 122 and a second portion 122b of IR transmission channel 122 form an angle theta (θ). In accordance with various embodiments, angle θ is greater than 90° and less than 180°. In various embodiments, angle θ is between 110° and 145°. In various embodiments, angle θ approximately 120°. As used in the previous context only, "approximately" means ± 5°. Angle θ may be selected based on the light absorption characteristics of IR transmission channel 122 (e.g., based on the black, gray, dark gray color) and/or to produce a desired scattering, diffusion, and/or reflection of the IR radiation 124 output by testing IR transmitter 120, and/or based on the IR radiation detectable by IR receiver 104. For example, IR radiation 124 tends to travel in straight path until contacting the surface of IR transmission channel 122. The contact with the surface of IR transmission channel 122 may cause the intensity of IR radiation 124 reflecting off the IR transmission channel 122 to decrease. The decreased intensity of the reflected IR radiation 124 may be closer to the intensity of the IR radiation from IR transmitters 102 after being reflected off a ULD. In this regard, IR transmission channel 122 may be designed to allow testing IR transmitter 120 to more closely emulate the IR radiation that IR receiver 104 is designed to detect.

With reference to FIG. 3B, in various embodiments, a lens 126 may be coupled to IR transmission channel 122. Lens 126 may be configured to focus IR radiation 124 toward IR receiver 104. In various embodiments, lens 126 may be a convex lens. In this regard, a convex surface of lens 126 may be oriented toward IR receiver 104. In various embodiments, a diameter D of the optical pathway 128 defined by IR transmission channel 122 is equal to the circumference of testing IR transmitter 120.

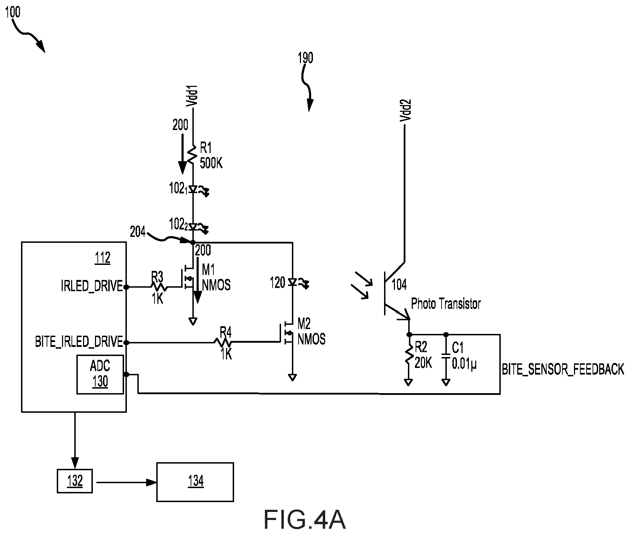

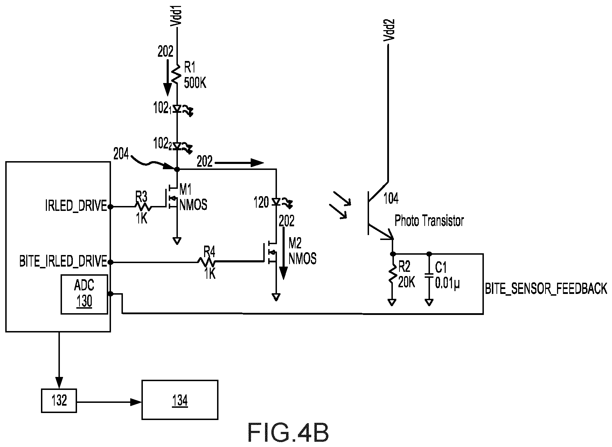

With reference to FIGs. 4A and 4B, a circuit diagram 190 for IR sensor assembly 100 is illustrated. FIG. 4A illustrates the flow of current 200 thru IR sensor assembly 100 with IR sensor assembly 100 in object detection mode (i.e., when IR sensor assembly 100 is not self-test mode as described below). FIG. 4B illustrates the flow of current 202 thru IR sensor assembly 100 with IR sensor assembly 100 in self-test mode.

In accordance with various embodiments, IR transmitter 102₁ and IR transmitter 102₂ are connected in series with a power supply Vdd1 and a first resistor R1, with first resistor is located between power supply Vdd1 and IR transmitter 102₁. A first metal-oxide-semiconductor field-effect transistor (MOSFET) M1 is electrically coupled between controller 112 and IR transmitters 102. A second MOSFET M2 is electrically coupled between controller 112 and testing IR transmitter 120. A connection 204 to testing IR transmitter 120 is located between MOSFET M1 and IR transmitters 102. While IR sensor assembly 100 is illustrated as having two (2) IR transmitters 102, it is contemplated and understood that any number of IR transmitters 102 may be coupled between first resistor R1 and the connection 204. A second power supply Vdd2 is electrically coupled to IR receiver 104 and is configured to generate Transistor-Transistor Logic level to controller 112.

When IR sensor assembly is in an object detection mode (FIG. 4A), a drive signal (IRLED_DRIVE), from controller 112 provides pulse width modulated (PWM) input to the MOSFET M1 gate. In accordance with various embodiments, the duty cycle during normal operation may be between 0% and 100%. When MOSFET M1 is on (i.e., when IRLED_DRIVE is at logic HIGH), IR transmitters 102 are powered on, and are thus emitting IR radiation. The reflected radiation may be reflected back and detected by IR receiver 104, when an object is located over IR sensor assembly 100 (e.g., over the PDU in which IR sensor assembly 100 is installed).

In accordance with various embodiments, controller 112 may be configured to perform a self-test of IR sensor assembly 100. Controller 112 may be configured to perform the self-test of IR sensor assembly 100 each time the cargo handling system and/or the PDU is powered on and/or at any other desired time interval. In this regard, in response to receiving an initial power on signal, controller 112 may perform a self-test. In various embodiments, controller 112 may be configured to perform additional equipment tests in response to receiving the initial power on signal. For example, controller 112 may perform a check of the brake, motor, and/or other sensor(s) of the PDU. In various embodiments, controller 112 may perform the self-test of IR assembly 100 simultaneously with, or in series with, one or more other PDU equipment checks.

During, the self-test of IR assembly 100, controller 112 turns MOSFET M1 off (i.e., IRLED DRIVE is at logic LOW) and turns on MOSFET M2 (i.e., BITE IRLED DRIVE is at logic HIGH). In this regard, a BITE drive signal (BITE IRLED DRIVE) from controller 112 provides PWM input to the MOSFET M2 gate. When MOSFET M2 is on, power (e.g. current 202) is provided to IR transmitters 102 and testing IR transmitter 120, thereby causing IR transmitters 102 and testing IR transmitter 120 to emit IR radiation.

The signal output by IR receiver 104 is probed across a second resistor R2 and provided to an Analog to Digital Converter (ADC) input of controller 112. The resistance value of second resistor R2 is selected based on the desired operating characteristics for IR sensor assembly 100. For example, decreasing the resistance value of second resistor R2 increases operating speed, but decreases sensitivity. Increasing the resistor value of second resistor R2 increases sensitivity, but decreases the operating speed.

If IR transmitter 102₁ or IR transmitter 102₂ is faulty, testing IR transmitter 120 does not turn on, during the self-test. Thus, controller 112 may identify a fault condition within the IR transmitters section of IR sensor assembly 100 if testing IR transmitter 120 fails to emit IR radiation during the self-test. If IR receiver 104 is not functioning properly, the BITE_Sense_Feedback signal is not generated or the BITE_Sense_Feedback signal is incorrect. In this regard, controller 112 may determine an expected BITE_Sense_Feedback signal based on the PWM duty cycle during the self-test. If the BITE_Sense_Feedback signal generated by IR receiver 104 does not match the expected BITE_Sense_Feedback signal, controller 112 identifies that a fault condition exists within the IR receiver section of IR sensor assembly 100.

The self-test function of IR sensor assembly 100 may also the range of detection for IR receiver 104 to be determined and tested. For example, the PWM duty cycle is set to a first percentage (e.g. 10%). The first percentage decreases the intensity of the IR radiation generated by testing IR transmitter 120. The percentage may produce the minimum detectable IR radiation for IR receiver 104. The decreased IR radiation correspondingly decreases the current flow through second resistor R2. The analog output BITE_Sense_Feedback signal received the ADC 130 of controller 112 is also decreased, but remains greater than zero Volts. ADC 130 is configured to sample and detect this low input threshold voltage as a black target. The PWM duty cycle may be set to a second, greater percentage (e.g., 60%). The second percentage increases the intensity of the IR radiation generated by testing IR transmitter 120 and the current flow through second resistor R2. The increased intensity produces an increased analog BITE_Sense_Feedback signal, which is greater than the 10% BITE_Sense_Feedback signal, but is configured to be less than ADC saturation voltage. The increased signal is received by the ADC 130. ADC samples and detects the high input voltage as presence of object/target. In this regard, if PWM duty cycle is at the second percentage and the BITE_Sense_Feedback signal produced does not correspond with the voltage that should be produced when an object is present over IR sensor assembly 100, then controller identifies that a fault condition exists in the IR receiver section of IR sensor assembly 100.

Upon identifying a fault condition, controller 112 may order a fault alert 132 to be output by an output device 134. In various embodiments, output device 134 may be a health monitoring system of the cargo handling system or other system configured to communicate information to an operator of the cargo handling system and/or to maintenance personnel working on cargo handling system or the PDU. For example, in various embodiments, output device 134 may include a display, a speaker, a network access device, and/or the like that sends a message to a remote terminal, or the like. Controller 112 may control output device 134 to output the health status of IR sensor assembly 100 to an operator of the cargo handling system in the form of an alert to mechanics servicing the cargo handling system from a centralized system. Fault alert 132 may be displayed as a symptom code included in a cargo handling system health report, which may be reviewed during a pre-loading or unloading check and/or during a routine maintenance inspection. In various embodiments, fault alert 132 may be configured to indicate whether the fault condition is in the IR transmitter section or the IR receiver section of IR sensor assembly 100.

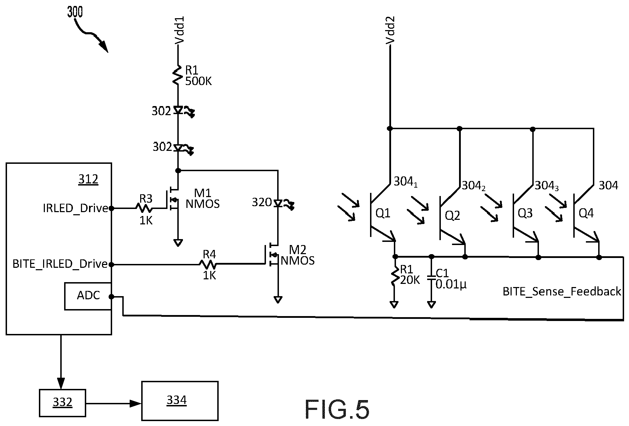

While IR sensor assembly 100 is illustrated as included in a PDU for a cargo handling system, it is contemplated and understood that the IR sensor assemblies having self-testing capability, as disclosed herein, may be incorporated into other components that employ IR sensors. For example, and with reference to FIG. 5, an IR sensor assembly 300 for a fire detector is illustrated. In accordance with various embodiments, IR sensor assembly 300 includes a pluralities of IR transmitters 302 similar to IR transmitters 102 in FIGs. 2A, 2B, 4A, and 4B. IR sensor assembly 300 further includes a pluralities of IR receivers 304. IR receivers 304 may be similar to IR receiver 104 in FIGs. 2A, 2B, 4A, and 4B. IR receivers 304 may detect radiant energy emitted by a fire. IR sensor assembly 300 may be located under and/or housed within a window or a lens. IR transmitters 302 are configured to aid in detection of dust or other contaminants, which may be present on the window and block or otherwise prevent IR receivers 304 from detecting a fire.

IR sensor assembly 300 further includes a testing IR transmitter 320. Testing IR transmitter 320 is similar to testing IR transmitter 120 in FIGs. 2B, 4A, and 4B. Testing IR transmitter 320 is optically coupled to IR receivers 304 by an IR transmission channel, similar to IR transmission channel 122 in FIG. 2B. IR sensor assembly 300 includes a controller 312 similar to controller 112. Controller 312 is configured to perform a self-test by turning on MOSFET M2 and turning off MOSFET M1. During normal operation (i.e., during object and fire detection), controller 312 turns MOSFET M2 off and turns MOSFET M1 on. As described above, if any of the IR transmitters 302 are faulty, testing IR transmitter 320 does not turn on during the self-test. Thus, controller 312 may identify a fault condition within the IR transmitters section of IR sensor assembly 300 if testing IR transmitter 320 fails to emit IR radiation during the self-test. If the IR receivers 304 are not functioning properly, IR receivers 304 do not generate a BITE_Sense_Feedback signal or the BITE_Sense_Feedback signal does not match the expected BITE_Sense_Feedback signal. In this regard, controller 312 may determine an expected BITE_Sense_Feedback signal based on the PWM duty cycle during the self-test. If the BITE_Sense_Feedback signal generated by IR receivers 304 does not match the expected BITE_Sense_Feedback signal, controller 312 identifies that a fault condition exists within the IR receiver section of IR sensor assembly 300. Upon identifying a fault condition, controller 312 may order a fault alert 332 to be output by an output device 334, similar to fault alert 132 and output device 134. In various embodiments, fault alert 332 may be configured to indicate whether the fault condition is in the IR transmitter section or the IR receiver section of IR sensor assembly 300.

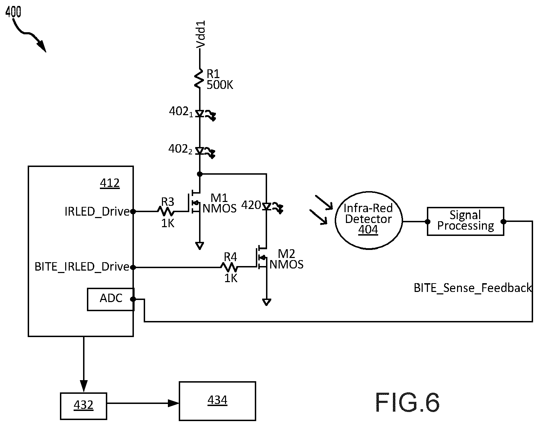

With reference to FIG. 6, an IR sensor assembly 400 for a IR camera is illustrated. In accordance with various embodiments, IR sensor assembly 400 includes a pluralities of IR transmitters 402 similar to IR transmitters 102 in FIGs. 2A, 2B, 4A, and 4B. IR sensor assembly 400 further includes an IR detector 404. IR detector 404 may be configured to detect radiant energy produced by objects in the field of view of the IR camera.

IR sensor assembly 400 further includes a testing IR transmitter 420, which is similar to testing IR transmitter 120 in FIGs. 2B, 4A, and 4B. Testing IR transmitter 420 is optically coupled to IR detector 404 by a IR transmission channel, similar to IR transmission channel 122 in FIG. 2B. IR sensor assembly 400 includes a controller 412 similar to controller 112. Controller 412 is configured to perform a self-test by turning on MOSFET M2 and turning off MOSFET M1. During normal operation (i.e., during object detection), controller 412 turns MOSFET M2 off and turns MOSFET M1 on. As described above, if any of the IR transmitters 402 are faulty, testing IR transmitter 420 does not turn on, during the self-test. Thus, controller 412 may identify a fault condition within the IR transmitters section of IR sensor assembly 400 if testing IR transmitter 420 fails to emit IR radiation during the self-test. If the IR detector 404 is not functioning properly, IR detector 404 does not generate a BITE_Sense_Feedback signal or the BITE_Sense_Feedback signal generated by IR detector 404 does not match an expected BITE_Sense_Feedback signal. In this regard, controller 412 may determine an expected BITE_Sense_Feedback signal based on the PWM duty cycle during the self-test. If the BITE_Sense_Feedback signal generated by IR detector 404 does not match the expected BITE_Sense_Feedback signal, controller 412 identifies that a fault condition exists within the IR receiver section of IR sensor assembly 400. Upon identifying a fault condition, controller 412 may order a fault alert 432 to be output by an output device 434, similar to fault alert 132 and output device 134. In various embodiments, fault alert 432 may be configured to indicate whether the fault condition is in the IR transmitter section or the IR receiver section of IR sensor assembly 400.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures. The scope of the disclosures is accordingly to be limited by nothing other than the appended claims and their legal equivalents, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B, and C may be present in a single embodiment; for example, A and B, A and C, B and C, or A and B and C.

Systems, methods, and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f), unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An infra-red sensor assembly (100), comprising:
a substrate (108);
a first infra-red transmitter (120) electrically coupled to the substrate;
an infra-red receiver (104) electrically coupled to the substrate;
a testing infra-red transmitter electrically coupled to the substrate; and
an infra-red transmission channel (122) optically coupling the testing infra-red transmitter and the infra-red receiver.

2. The infra-red sensor assembly of claim 1, further comprising:
a controller (112) operably coupled to the first infra-red transmitter, the infra-red receiver, and the testing infra-red transmitter;
a first metal-oxide-semiconductor field-effect transistor coupled between the controller and the first infra-red transmitter; and
a second metal-oxide-semiconductor field-effect transistor coupled between the controller and the testing infra-red transmitter.

3. The infra-red sensor assembly of claim 2, wherein the controller is configured to turn on the first metal-oxide-semiconductor field-effect transistor and turn off the second metal-oxide-semiconductor field-effect transistor when the infra-red sensor assembly is in an object detection mode.

4. The infra-red sensor assembly of claim 3, wherein the controller is configured to turn off the first metal-oxide-semiconductor field-effect transistor and turn on the second metal-oxide-semiconductor field-effect transistor when the infra-red sensor assembly is in a self-test mode.

5. The infra-red sensor assembly of claim 4, wherein the infra-red transmission channel defines an optical pathway, the optical pathway being configured to reflect infra-red radiation emitted from the testing infra-red transmitter toward to the infra-red receiver.

6. The infra-red sensor assembly of claim 5, further comprising a lens coupled to the infra-red transmission channel, and optionally wherein the lens comprises a convex surface oriented toward the infra-red receiver, or wherein a first portion of the infra-red transmission channel and a second portion of the infra-red transmission channel form a 120° angle.

7. A power drive unit, comprising:
an infra-red sensor assembly (1000 configured to detect objects located over the power drive unit, the infra-red sensor assembly, comprising:
a substrate (108);
a plurality of infra-red transmitters electrically coupled in series to the substrate;
an infra-red receiver electrically coupled to the substrate;
a testing infra-red transmitter (120) electrically coupled to the substrate; and
an infra-red transmission channel (122) optically coupling the testing infra-red transmitter and the infra-red receiver.

8. The power drive unit of claim 7, wherein the infra-red sensor assembly further comprises:
a controller operably coupled to the plurality of infra-red transmitters, the infra-red receiver, and the testing infra-red transmitter;
a first metal-oxide-semiconductor field-effect transistor coupled between the controller and the plurality of infra-red transmitters; and
a second metal-oxide-semiconductor field-effect transistor coupled between the controller and the testing infra-red transmitter.

9. The power drive unit of claim8, wherein the controller is configured to turn on the first metal-oxide-semiconductor field-effect transistor and turn off the second metal-oxide-semiconductor field-effect transistor when the infra-red sensor assembly is in an object detection mode, and wherein the controller is configured to turn off the first metal-oxide-semiconductor field-effect transistor and turn on the second metal-oxide-semiconductor field-effect transistor when the infra-red sensor assembly is in a self-test mode.

10. The power drive unit of claim 9, wherein the infra-red transmission channel defines an optical pathway, the optical pathway being configured to reflect infra-red radiation emitted from the testing infra-red transmitter toward to the infra-red receiver, and optionally wherein the infra-red sensor assembly further comprises a lens coupled to the infra-red transmission channel.

11. An article of manufacture including a tangible, non-transitory computer-readable storage medium having instructions stored thereon for controlling an infra-red sensor assembly, wherein the instructions, in response to execution by a controller, cause the controller to perform operations comprising:
receiving, by the controller, an initial power-on signal;
performing, by the controller, a self-check of the infra-red sensor assembly in response to the initial power-on signal; and
determining, by the controller, if a fault condition is present.

12. The article of claim 11, wherein performing, by the controller, the self-check of the infra-red sensor assembly, comprises:
powering off, by the controller, a first metal-oxide-semiconductor field-effect transistor electrically coupled between the controller and a plurality of infra-red transmitters; and
powering on, by the controller, a second metal-oxide-semiconductor field-effect transistor electrically coupled between the controller and a testing infra-red transmitter.

13. The article of claim 12, wherein determining, by the controller, if the fault condition is present comprises determining, by the controller, if the testing infra-red transmitter is emitting infra-red radiation.

14. The article of claim 13, wherein determining, by the controller, if the fault condition is present comprises:
determining, by the controller, an expected BITE_Sense_Feedback signal;
receiving, by the controller, a BITE_Sense_Feedback signal from an infra-red receiver of the infra-red sensor assembly; and
comparing, by the controller, the BITE_Sense_Feedback signal from the infra-red receiver to the expected BITE_Sense_Feedback signal.

15. The article of claim 14, wherein the operations further comprise ordering, by the controller, a fault alert to be output by an output device if the controller determines the fault condition is present, and optionally wherein the fault alert is configured to indicate whether the fault condition is in a transmitter section or a receiver section of the infra-red sensor assembly, and optionally wherein the infra-red sensor assembly comprises a infra-red transmission channel optically coupling the testing infra-red transmitter and the infra-red receiver.
